# EUROPEAN PATENT APPLICATION

(11) **EP 2 746 231 A1**
(43) Date of publication of application: **25.06.2014**
(21) Application number: 12198053.6
(22) Date of filing: 19.12.2012
(51) Int. Cl.: C02F 9/00, C02F 11/04, C02F 11/12, C10L 5/46, C10L 9/08

(54) **Method and apparatus for the treatment of process water from a hydrothermal organic material conversion process**

(71) Applicant: CS Carbon Solutions, 14532 Kleinmachnow (DE)
(72) Inventor: Dr. Arne Stark, 12623 Berlin (DE); Dr. Robert Maas, 14471 Potsdam (DE)
(74) Representative: HOFFMANN EITLE

(57) **Abstract**

The invention relates to a method for the treatment of process water (9) from a hydrothermal organic material conversion process. The method comprises an anaerobic fermenting step of anaerobically fermenting a biomass (16) in a fermenter (2), a dewatering step of mechanically dewatering the fermented biomass obtained in the fermenting step, a hydrothermal conversion step of subjecting the mechanically dewatered, fermented biomass obtained in the dewatering step to the hydrothermal organic material conversion process, and a first separation step of separating the process water (9) from a conversion product (11) obtained in the hydrothermal organic material conversion process. The method further comprises a second separation step of separating a feed material (9, 30, 36), which includes at least the process water (9) obtained in the first separation step, into at least a first component (12) and a second component (14) so that a level of chemical oxygen demand in the first component (12) is lower than a level of chemical oxygen demand in the second component (14) and less than 10 g/l, and a yield of the first component (12) relative to the feed material (9, 30, 36) is more than 30% by weight, and a recirculation step of returning at least a part of the second component (14) to the fermenter (2). Further, the invention relates to an apparatus for performing this method.

## Description

### Field of the Invention

According to a first aspect, the invention relates to a method for the treatment of process water from a hydrothermal organic material conversion process. According to a second aspect, the invention relates to an apparatus for the treatment of process water from a hydrothermal organic material conversion process. The present invention may be employed for hydrothermal carbonisation (HTC) processes or other processes in which a hydrothermal conversion of an organic material or organic materials occurs.

### Background Art

Process water can be degraded to a distinct level by aerobic and anaerobic waste water treatment technologies, as is disclosed in DE-A-10 2009 024 287. The remaining part of the process water still has a high level of chemical oxygen demand (COD) which is mostly refractory, i.e., non-biodegradable, in its nature. Thus, the COD is not fully degradable by a biological treatment. It has been suggested to treat this remaining non-biodegradable COD by adsorption with activated carbon (H.-G. Ramke et al., Machbarkeitsstudie zur Energiegewinnung aus organischen Siedlungsabfällen durch Hydrothermale Carbonisierung, Deutsche Bundesstiftung Umwelt, Abschlussbericht, Höxter, October 2010, pp. 197 ff.). However, this is a rather expensive approach since the remaining refractory COD has to be treated separately and the anaerobic reactors presented are not economically feasible. If high salt concentrations in the filtrate stream are present, these will be found in the effluent of the anaerobic reactor as well and further treatment will be necessary.

Another treatment method of waste water and CO₂ containing gases is disclosed in DE-B-10 2010 026 345. The waste water is fed into basins with water plants which minimise the COD. The organic pollutants in the waste water and the nutrients will be transferred to the water plants (e.g., duckweed or water hyacinths). The excess water is consumed by the plant roots, evaporated by the plant leaves and discharged from the specially designed greenhouse. The water plants are planted in basins which are arranged in up to 12 terraces over each other, in order to minimise area consumption. However, the area consumption is still high and, for a hydrothermal carbonisation (HTC) plant with a biomass input of 40,000 t per year, an estimated area of 1.5 hectares is required. Hence, also this approach exhibits problems with regard to economical feasibility.

In WO-A-2009/127727, an oxidising step is proposed to treat the liquid phase of a separation step after a second process step in a two-step HTC reactor by means of an oxidising agent, such as air.

Another treatment method for process water from an HTC process is disclosed in EP-A-2 206 688. The process water is oxidised under the conditions present in the HTC process by means of oxidising agents, such as oxygen, air or hydrogen peroxide. First, the product of the HTC process, namely a mixture of process water and solids, is separated under the conditions of the process. Subsequently, the process water is mixed with an oxidising agent (air, oxygen or hydrogen peroxide) and oxidation takes place, preferably with a catalyst present, e.g., ferrous salts. Oxidising agents, such as oxygen and hydrogen peroxides, and catalysts are expensive. Alternatively air can be used. However, all of the aforementioned oxidising agents produce large amounts of flue gases which have to be treated by expensive means. Therefore, also this method is problematic in terms of economical feasibility.

US-A-2006/0260186 relates to a method and an apparatus for intensifying the energy content of an organic material by converting the material into hydrocarbons and to the resulting product thereof. The resulting product is separated in a product recovery system using a membrane filter and an oil separator. A membrane filtration permeate may be further processed by feeding it to a separation unit, such as a reverse osmosis membrane unit.

DE-A-10 2009 010 233 discloses a process for generating coal from biomass by means of thermal carbonisation. Process water originating from this process may be purified either by ultrafiltration or by reverse osmosis.

However, the known methods and apparatuses for the treatment of process water from a hydrothermal organic material conversion process are limited in terms of efficiency and costs involved.

Digesting sewage sludge in a dedicated digester, thus generating biogas and digested sewage sludge, is a known approach. The digested sewage sludge is usually mechanically dewatered, e.g., by using a filter press or a centrifuge, and the filtrate thus obtained is recycled into a waste water treatment plant.

As is disclosed in DE-A-10 2009 024 287, surplus water from an HTC process is well suitable for anaerobic digestion if the main goal is biogas generation. However, only part of the organic load of the HTC surplus water is biodegradable, which renders anaerobic digestion incapable of solving the water treatment problem alone. Further, feeding the HTC surplus water directly to the digester would result in an inefficient combination of hydraulic load on the digester and biogas production.

### Summary of the Invention

Accordingly, it is an object of the present invention to provide a method for the efficient and inexpensive treatment of process water from a hydrothermal organic material conversion process. Moreover, the invention aims to provide an apparatus for performing this method.

These goals are achieved by a method with the technical features of claim 1 and an apparatus with the technical features of claim 11. Preferred embodiments of the invention follow from the dependent claims.

According to the first aspect, the present invention provides a method for the treatment of process water from a hydrothermal organic material conversion process. The method comprises an anaerobic fermenting step of anaerobically fermenting a biomass in a fermenter, a dewatering step of mechanically dewatering the fermented biomass obtained in the fermenting step, a hydrothermal conversion step of subjecting the mechanically dewatered, fermented biomass obtained in the dewatering step to the hydrothermal organic material conversion process, and a first separation step of separating the process water from a conversion product obtained in the hydrothermal organic material conversion process.

Further, the method comprises a second separation step of separating a feed material, which includes at least the process water obtained in the first separation step, into at least a first component and a second component so that a level of chemical oxygen demand (COD) in the first component is lower than a level of COD in the second component and less than 10 g/l, and a yield of the first component relative to the feed material is more than 30% by weight, and a recirculation step of returning at least a part of the second component to the fermenter.

In one embodiment, the entire second component may be returned to the fermenter.

The COD is a commonly used measure of the amount of organic compounds in water and, thus, a reliable measure of the water quality. The COD is expressed in grams per litre (g/l) which indicates the mass of oxygen in grams consumed per litre of solution, i.e., required to fully oxidise the organic compounds to carbon dioxide.

Herein, the term "feed material" refers to a material which is fed to the second separation step. In the second separation step, the feed material is separated into at least a first component and a second component. The feed material may comprise one or more elements. In particular, the feed material may comprise only the process water obtained in the first separation step. Alternatively, the feed material may comprise the process water and one or more further elements, e.g., fluid streams, such as further fluids, e.g., condensates, originating from the hydrothermal organic material conversion process or further fluids, e.g., condensates, originating from other parallel processes.

Herein, the yield of the first component relative to the feed material is defined as the ratio of the weight of the first component to the weight of the feed material. The yield of the first component relative to the feed material is more than 30% by weight, preferably more than 40% by weight, more preferably more than 50% by weight, even more preferably more than 65% by weight and yet more preferably more than 80% by weight.

Herein, the term "component" defines an entity which comprises one or more elements. The first component and/or the second component may comprise a single element, such as a fluid stream, or a plurality of elements, such as a plurality of fluid streams.

A yield of the second component relative to the feed material, i.e., a ratio of the weight of the second component to the weight of the feed material, may be less than 70% by weight, preferably less than 60% by weight, more preferably less than 50% by weight, even more preferably less than 35% by weight and yet more preferably less than 20% by weight.

In the second separation step, the feed material is separated into at least a first component and a second component so that a level of COD in the first component is lower than a level of COD in the second component and less than 10 g/l. The level of COD in the first component is preferably less than 8 g/l, more preferably less than 5 g/l, even more preferably less 3 g/l and yet more preferably less than 2.5 g/l.

A level of COD in the second component may be more than 20 g/l, preferably more than 50 g/l, more preferably more than 80 g/l and even more preferably more than 100 g/l. In this way, the efficiency of biogas production in the fermenter may be further improved.

The method of the invention provides a first component with a low level of COD, i.e., less than 10 g/l. This low level of COD facilitates the disposal and/or further treatment and/or reuse of the first component. Further, the method provides a second component with a higher level of COD. This higher level of COD in the second component enables an advantageous recirculation of at least a part of the second component to the fermenter. In particular, an organic load present in the second component is returned to the fermenter and thus made available for biogas production. Hence, the biogas production in the fermenter is enhanced without adversely affecting the hydraulic load of the fermenter. In particular, the low COD level first component is separated from the feed material and can thus be excluded from the fermenter, thereby keeping the hydraulic load in the fermenter low. In this way, the process water from the hydrothermal organic material conversion process can be treated in an efficient and inexpensive manner.

Unfermented, e.g., undigested, organic compounds, mostly humic acids and similar compounds, are given sufficient time for fixation onto the biomass in the fermenter. The retention time of the biomass in the fermenter, such as a digester, may be approximately 20 days or more. Hence, these unfermented organic materials are transferred to the fermented biomass and applied to the hydrothermal organic material conversion process. Therefore, an efficient and economical use of the resources can be ensured.

The second component may be in a liquid, paste-like or solid form.

The anaerobic fermenting step of anaerobically fermenting a biomass may be a digesting step of digesting a biomass. The fermenter may be a digester.

In the dewatering step, the fermented biomass obtained in the fermenting step may be mechanically dewatered using, for example, a filter press or a centrifuge.

The mechanically dewatered, fermented biomass obtained in the dewatering step and input to the hydrothermal organic material conversion process may be at least weakly acidic. Specifically, the biomass may have a pH value of less than 7, preferably 5.5 or less, more preferably in a range from 3 to 5.5 and even more preferably in a range from 3 to 4.5.

The term "biomass" as used herein is broadly understood as encompassing all kinds of plant and animal material and material derived from the same. Without limitation, examples of biomass are sewage sludge, crop, agricultural food and waste, feed crop residues, wood (such as wood flour, wood waste, scrap wood, sawdust, chips and discards), straw (including rice straw), grass, leaves, chaff, and bagasse. Furthermore, industrial and municipal wastes, including waste paper can be exemplified.

The process water from the hydrothermal organic material conversion process may be at least weakly acidic. Specifically, the process water to be treated may have a pH value of less than 7, preferably 5.5 or less, more preferably in a range from 3 to 5.5 and even more preferably in a range from 3 to 4.5.

The conversion product obtained in the hydrothermal organic material conversion process may be a solid material, such as coal, a coal-like material or the like. Further, the conversion product obtained in the hydrothermal organic material conversion process may be a liquid material, such as oil or the like.

The first separation step may be carried out by mechanical and/or thermal steps, such as filtering and/or evaporation or the like.

The method of the invention can be used for any type of hydrothermal process in which a conversion of an organic material or organic materials occurs. The method may be particularly advantageously applied to a hydrothermal carbonisation (HTC) process.

The HTC process leads to a coal slurry which is separated in the first separation step by mechanical and/or thermal means to gain a coal or coal-like material as the conversion product and process water. The coal or coal-like material can be used for combustion processes or the like or may be used as a raw material. A biomass fed to the HTC process should have a dry solids content in a range from 20 to 30%, preferably approximately 25%, for an economically feasible operation of the HTC system. Many types of available biomass have a higher dry solids content, e.g., leaves from street collection or the like. These types of biomass have to be mixed with water, preferably water from the HTC process, in order to achieve the desired dry solids content.

Sewage sludge which is anaerobically fermented in a fermenter, e.g., digested in a digester, thus generating biogas, and subsequently mechanically dewatered, e.g., by using a filter press or a centrifuge, usually has a total solids content of approximately 20 to 25%. Due to this range of total solids contents, such dewatered fermented sewage sludge can be particularly advantageously used as biomass input to the HTC process.

The HTC technology provides the following main advantages:
A combustion material with a better lower heating value than the original wet biomass can be obtained. Further, a wet biomass with a bad filterability in terms of the achievable total solids content is transformed into a coal slurry which can be easily separated in the first separation step into a wet HTC coal or coal-like material and process water by mechanical and/or thermal means. The dry solids content of the separated HTC coal or coal-like material can be easily doubled as compared to the input wet biomass by mechanical and/or thermal means. Moreover, the salts of the biomass, i.e., the monovalent and polyvalent ions, are efficiently separated from the coal or coal-like material and thus mainly present in the process water obtained in the first separation step.

The HTC coal or coal-like material obtained as a conversion product in the first separation step only contains a fraction of monovalent ions, such as chlorides, K ions and Na ions. The chlorides, the K ions and the Na ions are mainly found in the process water obtained in the first separation step. Usually, the biomass used in the HTC process is low in chlorides, K ions and Na ions, leading to a low chloride, K and Na content of the HTC coal. Since most of the chlorides, the K ions and the Na ions are removed from the HTC coal slurry in the first separation step, the HTC coal can be advantageously used in a subsequent combustion process, providing a low corrosion performance of the combustion gases and a high softening temperature of a resulting furnace slag.

By applying an energy efficient HTC process, preferably operating in a continuous manner, to a mechanically dewatered, fermented biomass, such as dewatered digested sewage sludge, the energy input required for the treatment can be reduced to a fraction of the energy input required for thermal drying. The pourable dispersion of coal particles in water obtained in the HTC process can be dewatered again mechanically, e.g., by using a filter press or a centrifuge, to a significantly higher degree than was possible prior to the HTC treatment. In particular, the use of a high pressure membrane filter press, preferably allowing for pressures in the range of 10 to 60 bar, e.g., 30 bar, to be applied to the pourable dispersion, for mechanically dewatering the dispersion is especially advantageous. In this way, a concentrate with a total solids content of approximately 70% can be achieved.

Such a pressing step results in very compact filter cakes and organic and salt rich filtrates. The mass of a filter cake produced in this manner represents only a fraction of the mass of the original dewatered fermented biomass, therefore achieving a major compacting and reduction, thereby considerably alleviating the original disposal problem. This filter cake may be directly used for combustion. Also, the filter cake may be subjected to a subsequent drying process. The drying properties of the filter cake are significantly improved compared to the dewatered fermented biomass and the total amount of water which needs to be evaporated in the drying step is reduced by a magnitude.

The conversion product, e.g., coal or coal-like material, separated in the first separation step may be dried in a drying unit, such as a dryer. Such subsequent drying of the coal or coal-like material leads to nearly dry coal particles and a dryer condensate. Other condensates from condensation processes from different sources of the HTC process, such as excess steam at varying pressure levels, may also be present. The process water from the HTC process and these condensates can only be partly reused in the HTC process due to the above-mentioned requirements regarding the total solids content of the biomass input to the HTC process.

The feed material to be subjected to the second separation step may comprise one or more of these condensates in addition to the process water obtained in the first separation step. In particular, condensates generated in the hydrothermal organic material conversion process, such as the HTC process, and/or a processing step of the conversion product may be mixed with the process water obtained in the first separation step prior to the second separation step. In this way, these condensates, e.g., condensates generated in the HTC process, can be treated together with the process water in the second separation step, thus enhancing the efficiency of the treatment process.

The processing step or steps of the conversion product may be, for example, a drying step and/or a further separation step, e.g., by evaporation, or the like. In particular, the condensates may be dryer condensates, e.g., obtained in a process of drying wet HTC coal or coal-like material.

HTC process water obtained in the first separation step is a polluted waste water scream with high COD levels and organic as well as inorganic impurities, e.g., salts. Since salts are water-soluble inorganic compounds, salts transported via the second component to the fermenter are excluded, at least for the most part, from the HTC process by mechanically dewatering the fermented biomass from the fermenter. Hence, a recycling of inorganic compounds into the HTC process is reliably suppressed.

For the case of an HTC process, a large fraction of the carbon content making up the organic load in the process water can be made available for biogas production by returning at least a part of the second component to the fermenter. In this way, the biogas production in the fermenter can be enhanced in a particularly efficient manner. In one embodiment, the at least a part of the second component returned to the fermenter is mixed with biomass in the fermenter in a ratio of 20% or less by weight, preferably 15% or less by weight, more preferably 12% or less by weight and even more preferably 10% or less by weight, relative to the biomass.

By mixing at least a part of the second component with fresh, unfermented biomass in the fermenter in such a ratio, a particularly advantageous combination of hydraulic load and effective concentration of organic material in the fermenter is achieved. In particular, due to the relatively small amount of the second component returned to the fermenter, the hydraulic load in the fermenter is not significantly increased. Further, an inhibition of microbiological activity in the fermenter, which may occur for excessively large concentrations of organic compounds, is reliably prevented.

In one embodiment, biogas produced in the fermenter, such as a digester, is used to provide energy for the hydrothermal organic material conversion process, such as the HTC process. The biogas may contribute partially or fully to the energy requirement of the hydrothermal organic material conversion process.

In one embodiment, the method further comprises a step of feeding at least a part of the first component to a waste water treatment plant. In this way, the at least a part of the first component can be disposed of in a particularly simple and cost efficient manner.

The method may further comprise a step of supplying biomass from a waste water treatment plant, i.e., biomass produced in or originating from a waste water treatment plant, to the fermenter, such as a digester. In particular, the biomass may be sewage sludge from a waste water treatment plant. As has been detailed above, dewatered fermented sewage sludge usually has a total solids content of 20 to 25% and can thus be particularly advantageously used for an HTC process.

In one embodiment, the method further comprises a step of feeding at least a part of water obtained in the dewatering step to a waste water treatment plant. In this way, the at least a part of the water obtained in the dewatering step can be disposed of in a particularly simple and cost efficient manner.

The steps of feeding at least a part of the first component to a waste water treatment plant, supplying biomass from a waste water treatment plant to the fermenter and feeding at least a part of water obtained in the dewatering step to a waste water treatment plant may be performed using the same waste water treatment plant. In this way, the method can be carried out in a particularly simple and inexpensive manner. In one embodiment, a ratio of the COD to a 5-day biological oxygen demand (BOD5) in the first component is less than 2.5, preferably less than 2.2 and more preferably less than 2.

The biological or biochemical oxygen demand (BOD) is the amount of dissolved oxygen needed by aerobic biological organisms in a body of water to break down organic material present in the water at a certain temperature over a specific period of time. The 5-day BOD value is specified in grams of oxygen consumed per litre of water during five days of incubation at 20°C. A part of the COD of the process water is refractory in its nature, i.e., non-biodegradable.
The presence of refractory COD in the process water is indicated by a ratio of the COD to the 5-day biological or biochemical oxygen demand of more than 2.

Refractory COD must be removed from the process water prior to disposal thereof. In some countries, a biodegradable and low COD, such as less than 2.5 g/l, in the water to be disposed of has to be achieved due to legal regulations. Otherwise, disposal of the water is prohibited or may be only allowed if expensive additional fees are paid. Hence, a low COD to BOD5 ratio of less than 2.5, preferably less than 2.2 and more preferably less than 2, facilitates disposal of the first component in a simple and inexpensive manner, e.g., in a waste water treatment plant. An efficient removal of refractory COD from the process water can be achieved by a membrane filtering step using a membrane filter comprising a dense membrane, as will be detailed below.

In one embodiment, the second separation step comprises a membrane filtering step using a membrane filter comprising a dense membrane.

The term "dense membrane" is well-known in the art of membrane filtering and defines a substantially non-porous membrane, allowing the transport of a medium therethrough mainly or only by diffusion. Preferably, herein, the dense membrane is a membrane with a salt retention of 90% or more, more preferably 92% or more, even more preferably 94% or more, yet more preferably 96% or more and yet still more preferably 98% or more for 32,000 ppm (parts per million) NaCl as the salt at a pressure of 55 bar, a temperature of 25°C and a membrane yield of 10%. The term "salt retention" is defined as the fraction of the salt present in the medium to be filtered by the membrane which remains in the retentate of the membrane after the filtering process.

The dense membrane may be a membrane which is configured so that a permeate of the membrane filter has a level of COD of less than 2.5 g/l and contains less than 2% of monovalent and polyvalent ions present in the process water obtained in the first separation step.

In particular, the membrane filtering step may be a reverse osmosis filtering step using a reverse osmosis membrane filter. In this case, the dense membrane is a reverse osmosis membrane.

In addition to providing a permeate with a low COD level and a low salt content, dense membranes offer the further advantage that the permeate has a biodegradability which is significantly improved as compared to the biodegradability of the material input to the dense membrane. Therefore, permeates of dense membranes can be disposed to a public sewage system and/or treated elsewhere and/or reused in the organic material conversion process, such as an HTC process.

In particular, the second separation step may consist of a membrane filtering step using such a membrane filter with a dense membrane. In this case, a retentate of the dense membrane forms the second component of the second separation step and the permeate of the dense membrane forms the first component of the second separation step. In this way, the second separation step can be carried out in a particularly simple manner.

The permeate of such a membrane filter, i.e., the flow passing through the membrane filter, is low in COD and thus suitable for further treatment by inexpensive processes, such as biological treatment. Further, the permeate may be disposed to the public sewage system in an inexpensive manner or treated onsite in a waste water treatment plant.

Moreover, the low salt load of the permeate, e.g., a load of less than 2% of monovalent and polyvalent ions present in the process water obtained in the first separation step, allows for an efficient reuse of the permeate in the hydrothermal organic material conversion process, thereby reducing both the amount of waste water to be disposed of and the need for fresh water in the hydrothermal organic material conversion process. In this way, the costs of the process water treatment can be considerably reduced. The monovalent ions may be, for example, Na⁺, K⁺, Cl⁻ etc. and the polyvalent ions may be, for example, Mg²⁺, SO4²⁻, Fe³⁺ etc.

Only a part of the HTC process water can be reused in the mixing stage of the HTC process, depending on the amount of total solids present in the biomass input to the HTC process, as has been detailed above. The process water being reused in the mixing stage should be low in salt content to maintain a high quality of the HTC coal. Since the permeate of the membrane filter has a low salt load, e.g., less than 2% of monovalent and polyvalent ions present in the process water obtained in the first separation step, at least a part of the permeate can be reused in the mixing stage of the HTC process without compromising the quality of the HTC coal. In this way, the need for fresh water in the HTC mixing stage can be reduced or even eliminated, thus further improving the efficiency and reducing the costs of the process. Moreover, the amount of waste water which has to be disposed of is further reduced.

Further, since the salt content of the permeate of the membrane filter is low, problems associated with a possible corrosion of the HTC equipment can be reliably prevented in an efficient and inexpensive manner.

Preferably, the amount of process water being reused in the mixing stage of the HTC process does not exceed the amount needed to adjust the total solids content of the input biomass to a desired value. A high total solids content above 20% is preferable because, in this case, the operation of the HTC plant is more feasible from a technical and economical point of view. A total solids content of 25% is particularly advantageous for the operation of the HTC process. Above a total solids content of 25%, the pumpability of certain types of biomass might be limited, thus rendering a transport of the biomass into the HTC process difficult or even impossible.

Alternatively, the second separation step may comprise a combination of a filtration, e.g., nanofiltration, and/or evaporation step and a membrane filtering step using a membrane filter comprising a dense membrane. In particular, a nanofiltration step, an evaporation step or a combined nanofiltration and evaporation step may be combined with the membrane filtering step. The nanofiltration step may be performed by using a membrane filter comprising a nanofiltration membrane. The membrane filtering step may be a reverse osmosis filtering step using a reverse osmosis membrane filter.

The nanofiltration step separates the feed material, which includes at least the process water obtained in the first separation step, into a retentate (concentrate) and a permeate. The retentate and the permeate of the nanofiltration step have the following COD characteristics.

The major part of the COD is present in the retentate. Specifically, the COD level in the retentate may be at least twice as high as the COD level in the process water obtained in the first separation step. A part of the original COD load present in the process water obtained in the first separation step may pass through the filter, such as the nanofiltration membrane, and be present in the permeate. A medium level of COD may be present in the permeate of the nanofiltration step, which is lower than the COD of the process water obtained in the first separation step and, for example, higher than 2.5 g/l.

The salt and/or mineral content distribution between the nanofiltration retentate and the nanofiltration permeate depends on the characteristics of the filter used, such as the membrane characteristics of a nanofiltration membrane. The filter, e.g., the nanofiltration membrane, may be configured so that it retains most of the salts present in the process water obtained in the first separation step, for example, more than 50%, preferably 70% or more, more preferably 90% or more, even more preferably 95% or more and yet more preferably 98% or more thereof.

Further, the filter, e.g., the nanofiltration membrane, may be configured so that it retains, for example, 10% or more, preferably 20% or more, more preferably 40% or more, yet more preferably 50% or more, still more preferably 60% or more and yet still more preferably 70% or more of the monovalent ions present in the process water obtained in the first separation step and/or, for example, 50% or more, preferably 60% or more, more preferably 70% or more, yet more preferably 80% or more and still more preferably 90% or more of the polyvalent ions present in the process water obtained in the first separation step.

Alternatively, the filter, e.g., the nanofiltration membrane, may be configured so that most of the salts present in the process water obtained in the first separation step, for example, more than 50%, preferably 70% or more, more preferably 90% or more, yet more preferably 95% or more and still more preferably 98% or more thereof, pass through the filter into the nanofiltration permeate.

Further, the filter, e.g., the nanofiltration membrane, may be configured so that, for example, 10% or more, preferably 20% or more, more preferably 40% or more, yet more preferably 50% or more, still more preferably 60% or more and yet still more preferably 70% or more of the polyvalent ions present in the process water obtained in the first separation step and/or, for example, 50% or more, preferably 60% or more, more preferably 70% or more, yet more preferably 80% or more and still more preferably 90% or more of the monovalent ions present in the process water obtained in the first separation step pass through the filter into the nanofiltration permeate.

If the filter used in the nanofiltration step, e.g., the nanofiltration membrane, is configured so that most of the salts present in the process water obtained in the first separation step pass through the filter, the salts from the process water are mainly present in the nanofiltration permeate.

The retentate of the nanofiltration step may have a medium salt load, e.g., 10% or less of the original monovalent ions and less than 30% of the polyvalent ions present in the process water, and a high level of COD, i.e., a COD level which is higher than the COD level of the process water obtained in the first separation step. Hence, in this case, at least a part of the retentate of the nanofiltration step may be returned to the mixing stage of an HTC process without compromising the quality of the HTC coal or coal-like material.

The permeate of the nanofiltration step is subjected to the membrane filtering step. In this way, the membrane yield of the membrane filtering step can be improved over the membrane yield of a process in which membrane filtering alone is performed.

Herein, the term "membrane yield" defines the percentage of the mass fraction of the feed material which is present in the permeate of the membrane filter. For example, a 100% membrane yield specifies that 100% of the mass of the feed material are present in the permeate of the membrane filter, while a membrane yield of 0% specifies that the entire mass of the feed material remains in the retentate (concentrate) of the membrane filter, i.e., the flow which is retained by the membrane filter. By improving the yield of the membrane filter, the efficiency of the treatment process is enhanced.

The permeate of the dense membrane forms the first component of the second separation step. The retentate of the nanofiltration membrane and/or the retentate of the dense membrane form the second component of the second separation step.

As has been indicated above, instead of the nanofiltration step, an evaporation step may be combined with the membrane filtering step. This approach is particularly advantageous if an inexpensive heat source, such as cooling water of a combined heat and power unit, e.g., a co-generation plant, is available. Further, biogas produced in the fermenter may be used to provide at least a part of the energy required for the evaporation step. The evaporation step may be a vacuum evaporation step.

In the evaporation step, the feed material, including at least the process water obtained in the first separation step, is separated into a concentrate containing most of the COD load of the process water and nearly all of the salts thereof, e.g., 90% or more, preferably 95% or more and more preferably 98% or more thereof, and vapour. The vapour generated in the evaporation step has a low salt content and a medium level of COD after condensation thereof.

Condensation of the vapour separated in the evaporation step produces a condensate with a composition which is similar to that of the above-mentioned condensate from the HTC process. The condensed vapour of the evaporation step, which has a low salt content and a medium COD level, is fed to the membrane filter and filtered in the membrane filtering step. In this way, the membrane yield of the membrane filtering step is improved.

In this case, the first component of the second separation step is formed by the permeate of the dense membrane. The concentrate obtained in the evaporation step and/or the retentate of the dense membrane form the second component of the second separation step.

Further, a combined nanofiltration and evaporation step may be combined with the membrane filtering step. The combination of a nanofiltration step with an evaporation step can be advantageously used to improve the overall efficiency of the second separation step.

In this configuration, four flows are generated, namely the permeate of the nanofiltration, the condensate of the vapour from the evaporation step, minor amounts of flue gases from the evaporation step and the concentrate from the evaporation step. Depending on the characteristics of the filter used for the nanofiltration, e.g., the nanofiltration membrane, the major part of the salt load is either present in the nanofiltration permeate or the nanofiltration retentate.

In this combined approach, the nanofiltration may be performed prior to the evaporation. Specifically, the nanofiltration step may separate the feed material, which includes at least the process water obtained in the first separation step, into a retentate and a permeate. The nanofiltration retentate may be fed as an input flow to an evaporation unit where it is separated into a concentrate and a vapour. The condensed vapour and/or the nanofiltration permeate may be fed to the membrane filter and subjected to the membrane filtering step.

The explanations provided above for the salt content distribution in the nanofiltration step also apply to the combined nanofiltration and evaporation step.

By adopting such a combined approach, the membrane yield of the membrane filtering step can be further improved.

In this case, the first component of the second separation step is formed by the permeate of the dense membrane. The second component of the second separation step is formed by the concentrate of the evaporation unit and/or the retentate of the dense membrane.

Using a nanofiltration and/or evaporation step in combination with the membrane filtering step as the second separation step further provides the following advantages:
The nanofiltration step, the evaporation step and the combined nanofiltration and evaporation step enhance the performance of the subsequent membrane filtering step, improving the membrane yield of the membrane filtering step. In particular, if a reverse osmosis membrane is used in the membrane filter of the membrane filtering step, the membrane yield of the reverse osmosis filtering step may be increased from a level of approximately 37% to a level of above 75 to 85%.

The retentate of the membrane filtering step may have a medium salt content and a high level of COD. Thus, at least a part of the membrane filtering retentate can be advantageously returned to the fermenter for enhancing the production of biogas. The nanofiltration retentate may have a high salt level, e.g., more than 50% of the monovalent ions and more than 90% of the polyvalent ions present in the process water obtained in the first separation step, and a high level of COD, preferably above 100 g/l. Thus, also at least a part of the nanofiltration retentate can be advantageously returned to the fermenter for enhancing the biogas production.

The concentrate produced in the evaporation step may contain nearly all salts and most of the COD load. Therefore, at least a part of the concentrate can be advantageously returned to the fermenter for enhancing the biogas production. Further, in this case, the condensed vapour (condensate) of the evaporation step contains nearly no salts and a medium level of COD. Thus, the retentate of the membrane filtering step may be used at least partly in the mixing stage of an HTC process.

The membrane filtering step in the embodiments described above may be a reverse osmosis filtering step using a reverse osmosis membrane filter. In this case, the membrane filtering step can be performed in a particularly efficient manner, leading to a permeate with a low level of biodegradable COD and a low salt content which can be easily disposed to a municipal or industrial sewage system and/or a waste water treatment plant. Further, at least a part of the permeate may be used as a fresh water substitute in the hydrothermal organic material conversion process, e.g., in an HTC process.

In a further embodiment, the second separation step may consist of a thermal concentration step, e.g., by using an evaporation unit as described above. In this case, the first component of the second separation step is formed by the condensed vapour (condensate) of the thermal concentration step and the second component of the second separation step is formed by the concentrate of the thermal concentration step.

If the second separation step features a heat requirement, e.g., for a thermal concentration step, such as an evaporation step, this need can advantageously be covered using cooling water from a co-generation plant utilising the biogas generated in the fermenter, preferably by using vacuum-type drying equipment.

The method of the invention may further comprise a step of mixing condensates generated in the hydrothermal organic material conversion process and/or a processing step of the conversion product into the process water obtained in the first separation step prior to the second separation step and/or into the nanofiltration permeate and/or the evaporation condensate prior to the membrane filtering step and/or into the permeate of the membrane filter. In this way, these condensates, e.g., condensates generated in an HTC process, can be treated together with the process water in the second separation step and/or in the membrane filtering step and/or after the membrane filtering step, thus further enhancing the efficiency of the treatment process.

In one embodiment, the method further comprises a step of returning a part of the second component to the hydrothermal organic material conversion process, such as an HTC process. In particular, a part of the second component may be reused for adjusting the total solids content of the biomass input into the hydrothermal organic material conversion process, for example, in the mixing stage of an HTC process, to a desired value. In particular, in order to manage the load of organic compounds originating from the hydrothermal organic material conversion process on the fermenter, e.g., during start-up of the fermenting step, or in order to achieve a mild adaption of the microbes in the fermenter, the fermenter may be bypassed and a part of the second component may be returned directly to the hydrothermal organic material conversion process.

At least a part of the first component may be returned to the hydrothermal organic material conversion process, such as an HTC process, e.g., for adjusting the total solids content of the biomass input into the hydrothermal organic material conversion process to a desired value, and/or supplied to a steam generator for generating steam to be used in the hydrothermal organic material conversion process, such as an HTC process. In particular, a part of the first component may be used for adjusting the total solids content of the biomass in the hydrothermal organic material conversion process, while another part of the first component may be supplied to the steam generator.

In this way, the first component may be used as a substitute for fresh water in the steam generator, thus leading to a reduction in fresh water consumption and a lower amount of water to be disposed to a public or industrial waste water treatment plant. Such an at least partial reuse of the first component offers a further reduction of the process costs. The remaining part of the first component may be fed to a waste water treatment plant for further processing. In this way, most of the water can be excluded from the fermenting step, thereby achieving a further reduction in the hydraulic load of the fermenter.

Such a reuse of at least a part of the first component can be particularly advantageously applied to an HTC process. In particular, the HTC process uses as a favourable implementation a steam generator producing steam to heat the biomass to the temperature levels needed in the process.
This steam generator usually uses a substantial amount of fresh water in the process. However, water with a low salt and organic content is acceptable for use in the steam generator as a fresh water substitute.

Further, if the at least a part of the first component is used for steam generation, it may be treated to improve the input quality to the steam generator by means of a treatment step, e.g., a membrane filtering step, such as a reverse osmosis filtering step, and/or an ion exchange step and/or an activated carbon step and/or a step of adding a chemical and/or pH adjustment component, such as an amine solution, and/or degassing, e.g., by a thermal step, or the like. In particular, the addition of a pH adjustment component helps to prevent corrosion of the steam generator.

At least a part of the energy required for the generation of steam in the steam generator may be provided by biogas produced in the fermenter, such as a digester.

According to the second aspect, the present invention provides an apparatus for the treatment of process water from a hydrothermal organic material conversion process. The apparatus comprises a fermenter for anaerobically fermenting a biomass, a dewatering unit connected to the fermenter, wherein the dewatering unit is arranged to receive the fermented biomass from the fermenter and to mechanically dewater the fermented biomass, a hydrothermal conversion unit connected to the dewatering unit, wherein the hydrothermal conversion unit is arranged to receive the mechanically dewatered, fermented biomass from the dewatering unit and to subject the mechanically dewatered, fermented biomass to the hydrothermal organic material conversion process, and a first separation unit for separating the process water from a conversion product obtained in the hydrothermal organic material conversion process.

The apparatus further comprises a second separation unit connected to the first separation unit, wherein the second separation unit is arranged to receive the process water from the first separation unit and to separate a feed material, which includes at least the process water from the first separation unit, into at least a first component and a second component so that a level of COD in the first component is lower than a level of COD in the second component and less than 10 g/l, and a yield of the first component relative to the feed material is more than 30% by weight, and a first recirculation unit for returning at least a part of the second component to the fermenter.

The fermenter may be a digester for digesting a biomass. The dewatering unit may be a filter press, such as a high pressure membrane filter press, a centrifuge or the like. The first separation unit may be a filter, a thermal separation unit, such as an evaporator, a combined mechanical and thermal separation unit or the like. The first recirculation unit may comprise one or more pumps for conveying at least a part of the second component.

The apparatus according to the invention provides the advantageous effects already described in detail above for the method of the invention. In particular, the apparatus enables an efficient and inexpensive treatment of process water from a hydrothermal organic material conversion process.

In one embodiment, the hydrothermal organic material conversion process is a hydrothermal carbonisation process. The hydrothermal conversion unit may be a hydrothermal carbonisation unit, e.g., an HTC reactor. In this case, the apparatus of the invention can be used in a particularly advantageous manner, as has been explained in detail above.

The ratio of the COD to the BOD5 in the first component may be less than 2.5, preferably less than 2.2 and more preferably less than 2.0.

The second separation unit may comprise a membrane filter comprising a dense membrane. In particular, the second separation unit may be formed by a membrane filter comprising a dense membrane. Alternatively, the second separation unit may comprise a nanofiltration unit, an evaporation unit or a combined nanofiltration and evaporation unit in combination with a membrane filter comprising a dense membrane.

The nanofiltration unit, the evaporation unit and the combined nanofiltration and evaporation unit are configured to perform the nanofiltration step, the evaporation step and the combined nanofiltration and evaporation step, respectively, which have been described in detail above.

The dense membrane of the membrane filter may be a reverse osmosis membrane.

The apparatus may further comprise a second recirculation unit for returning a part of the second component to the hydrothermal conversion unit. The second recirculation unit may comprise one or more pumps for conveying at least a part of the second component.

Moreover, the apparatus may further comprise a mixing unit for mixing condensates generated in the hydrothermal organic material conversion process and/or a processing step of the conversion product into the process water obtained from the first separation unit and/or into the nanofiltration permeate and/or the evaporation condensate prior to membrane filtering and/or into the permeate of the membrane filter. The mixing unit may be a receptacle, such as a pipe, a tube, a vessel or the like, in which the condensates and the process water and/or the nanofiltration permeate and/or the evaporation condensate and/or the permeate of the membrane filter are mixed.

The apparatus may comprise a plurality of mixing units, e.g., two or more, three or more or four or more mixing units. For example, the apparatus may comprise a mixing unit for mixing condensates generated in the hydrothermal organic material conversion process and/or a processing step of the conversion product into the process water obtained from the first separation unit and/or a mixing unit for mixing condensates generated in the hydrothermal organic material conversion process and/or a processing step of the conversion product into the nanofiltration permeate and/or the evaporation condensate prior to membrane filtering and/or a mixing unit for mixing condensates generated in the hydrothermal organic material conversion process and/or a processing step of the conversion product into the permeate of the membrane filter.

The apparatus may comprise a mixing unit for mixing the at least a part of the second component returned to the fermenter with biomass in the fermenter in a ratio of 20% or less by weight, preferably 15% or less by weight, more preferably 12% or less by weight and even more preferably 10% or less by weight, relative to the biomass.

The apparatus may comprise a first feed unit for feeding at least a part of the first component to a waste water treatment plant.

The apparatus may comprise a supply unit for supplying biomass from a waste water treatment plant to the fermenter. The apparatus may comprise a second feed unit for feeding at least a part of water obtained in the dewatering unit to a waste water treatment plant.

The supply unit and the first and second feed units may be configured for being connected to the same waste water treatment plant.

The apparatus of the invention is an apparatus for performing the method of the invention. Hence, the further features disclosed in connection with the above description of the method of the invention may also be applied to the apparatus of the invention.

### Brief Description of the Drawings

Hereinafter, non-limiting examples are explained with reference to the drawings, in which:
Fig. 1 shows a schematic view of an apparatus according to a first embodiment of the present invention;
Fig. 2 shows a schematic view of an apparatus according to a second embodiment of the present invention; and
Figs. 3(a) to 3(c) show schematic views of portions of second separation units of apparatuses according to different embodiments of the present invention.

### Detailed Description of Preferred Embodiments

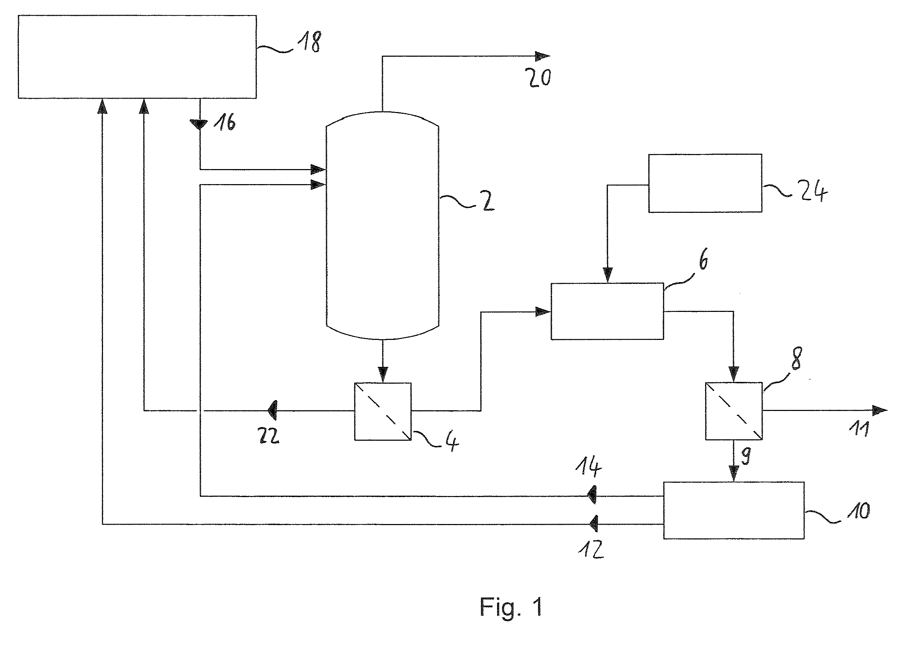

Fig. 1 shows a schematic view of an apparatus according to a preferred first embodiment of the present invention.

The apparatus shown in Fig. 1 comprises a fermenter 2, such as a digester, for anaerobically fermenting a biomass 16, a dewatering unit 4, such as a filter press or a centrifuge, connected to the fermenter 2, wherein the dewatering unit 4 is arranged to receive the fermented biomass from the fermenter 2 and to mechanically dewater the fermented biomass, and a hydrothermal conversion unit 6, such as an HTC reactor, connected to the dewatering unit 4, wherein the hydrothermal conversion unit 6 is arranged to receive the mechanically dewatered, fermented biomass from the dewatering unit 4 and to subject the mechanically dewatered, fermented biomass to a hydrothermal organic material conversion process, such as an HTC process.

The apparatus further comprises a first separation unit 8, such as a filter, a thermal separation unit, a combined mechanical and thermal separation unit or the like, for separating process water 9 from a conversion product 11 obtained in the hydrothermal organic material conversion process in the hydrothermal conversion unit 6.

Moreover, the apparatus comprises a second separation unit 10 connected to the first separation unit 8, wherein the second separation unit 10 is arranged to receive the process water 9 from the first separation unit 8 and to separate a feed material into at least a first component 12 and a second component 14 so that a level of COD in the first component 12 is lower than a level of COD in the second component 14 and less than 10 g/l, and a yield of the first component 12 relative to the feed material is more than 30% by weight, and a first recirculation unit (not shown) for returning at least a part of the second component 14 to the fermenter 2.

In the apparatus of the first embodiment shown in Fig. 1, the feed material includes only the process water 9 from the first separation unit 8. Further, the first recirculation unit is configured so that the entire second component 14 is recirculated to the fermenter 2.

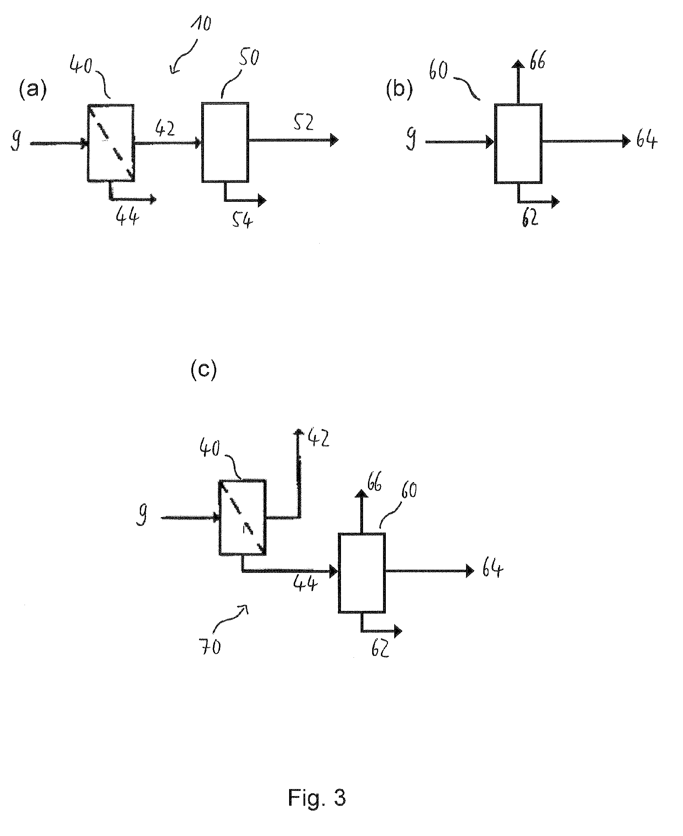

The second separation unit 10 may be, for example, a membrane filter comprising a dense membrane, such as a reverse osmosis membrane, a thermal concentrator, such as an evaporator, or a combination of a nanofiltration and/or evaporation unit and a membrane filter with a dense membrane, such as a reverse osmosis membrane, as described above. Different embodiments of the second separation unit 10 will be described in detail below with reference to Fig. 3.

Biomass 16 is supplied to the fermenter 2 from a waste water treatment plant 18. The biomass 16 is anaerobically fermented in the fermenter 2, thereby producing biogas 20. The fermented biomass is fed to the dewatering unit 4, where it is mechanically dewatered. Water 22 obtained in this dewatering step is fed to the waste water treatment plant 18.

The mechanically dewatered, fermented biomass is supplied to the hydrothermal conversion unit 6 and subjected to the hydrothermal organic material conversion process, such as an HTC process. In order to achieve the elevated temperatures required for the hydrothermal organic material conversion process, steam is supplied to the hydrothermal conversion unit 6 by a steam generator 24.

The process water 9 is separated from the conversion product 11 obtained in the hydrothermal organic material conversion process in the first separation unit 8. Subsequently, the process water 9 is supplied to the second separation unit 10 and separated into the first component 12 and the second component 14.

The second component 14 is returned to the fermenter 2 and mixed with fresh biomass 16, supplied by the waste water treatment plant 18, in a ratio of 20 % or less by weight relative to the biomass 16. In this way, the production of biogas 20 in the fermenter 2 can be significantly enhanced, due to the presence of the organic load in the second component 14, without adversely affecting the hydraulic load of the fermenter 2. The first component 12, which has a low level of COD, is fed to the waste water treatment plant 18.

Hence, the apparatus of the first embodiment shown in Fig. 1 allows for an efficient and inexpensive treatment of process water 9 originating from a hydrothermal organic material conversion process, such as an HTC process.

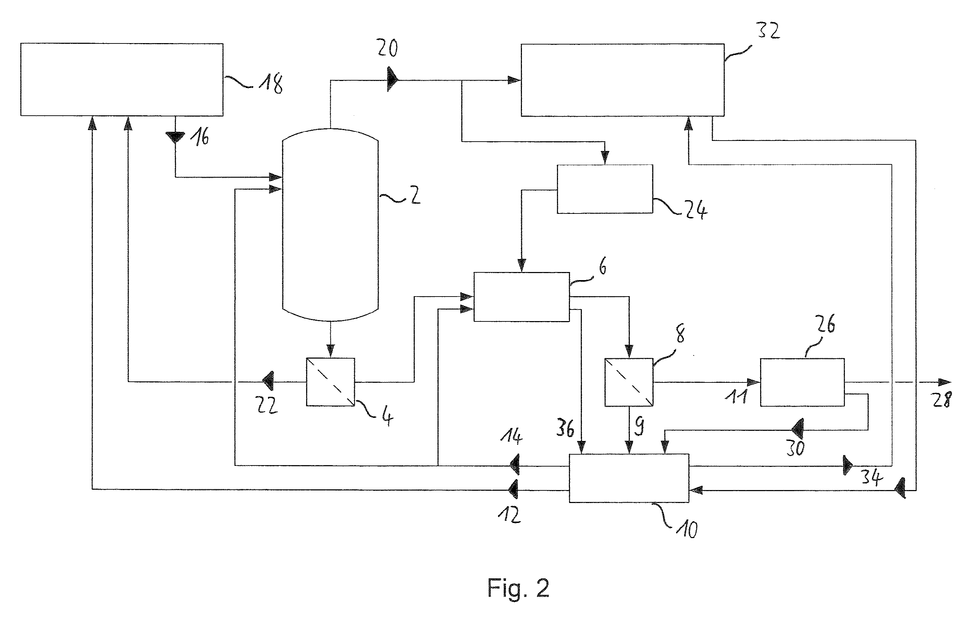

Fig. 2 shows a schematic view of an apparatus according to a preferred second embodiment of the present invention.

The apparatus of the second embodiment also comprises the elements which have been described above for the apparatus of the first embodiment. Hence, the same reference signs are used for these elements and a detailed description thereof is omitted. Moreover, the apparatus of the second embodiment comprises further elements in addition to those of the apparatus of the first embodiment, which will be described in detail in the following.

The apparatus of the second embodiment further comprises a drying unit 26, such as an evaporator, which is connected to the first separation unit 8 and arranged to receive the conversion product 11 from the first separation unit 8. The drying unit 26 is configured to subject the conversion product 11 to a drying process, thereby producing a dried conversion product 28 and a condensate 30. The dried conversion product 28, such as HTC coal or coal-like material, is directly usable for combustion. The condensate 30 of the drying unit 26 is supplied to the second separation unit 10 as part of the feed material.

Further, the apparatus is in connection with a co-generation plant 32. The energy requirement of the co-generation plant 32 is partly or fully covered by biogas 20 produced in the fermenter 2. Further, a part of the biogas 20 is also supplied to the steam generator 24 in order to provide the energy required for steam generation.

The second separation unit 10 comprises a thermal concentrator, such as an evaporator. The energy, i.e., heat, required for thermal concentration is provided by using cooling water 34 from the co-generation plant 32.

Moreover, the apparatus is configured so that condensates 36 from the hydrothermal organic material conversion process, such as an HTC process, are supplied to the second separation unit 10. Hence, in the apparatus of the second embodiment, the feed material comprises the process water 9, the condensate 30 of the drying unit 26 and condensates 36 from the hydrothermal organic material conversion process.

The apparatus further comprises a second recirculation unit (not shown) for returning a part of the second component 14 to the hydrothermal conversion unit 6. In this way, the load of organic compounds supplied to the fermenter 2 can be controlled, e.g., during start-up of the fermenting process, and a mild adaption of the microbes in the fermenter 2 can be achieved.

Therefore, the apparatus according to the second embodiment allows for a particularly energy and cost efficient treatment of process water originating from a hydrothermal organic material conversion process, such as an HTC process.

Fig. 3 shows schematic views of different embodiments of the second separation unit 10 of the apparatuses of the first and second embodiments.

As is schematically shown in Fig. 3(a), the second separation unit 10 may be a combination of a nanofiltration unit 40 and a membrane filter 50 comprising a dense membrane, such as a reverse osmosis membrane. The membrane filter 50 is connected to the nanofiltration unit 40 and arranged to receive a permeate 42 from the nanofiltration unit 40.

The nanofiltration unit 40 comprises a nanofiltration membrane for separating the feed material, e.g., the process water 9 or the process water 9 and the condensates 30, 36 from the drying unit 26 and the hydrothermal organic material conversion process, into a retentate 44 and the permeate 42.

The feed material is supplied to the nanofiltration unit 40 and separated into the retentate 44 and the permeate 42. The permeate 42 of the nanofiltration unit 40 is fed to the membrane filter 50 and separated into a retentate 54 and a permeate 52. The permeate 52 of the membrane filter 50 forms the first component 12 produced by the second separation unit 10. The retentate 44 of the nanofiltration unit 40 and/or the retentate 54 of the membrane filter 50 form the second component 14 produced by the second separation unit 10.

By using a combination of the nanofiltration unit 40 and the membrane filter 50 for the second separation unit 10, the membrane yield of the membrane filter 50 can be significantly enhanced, as has been detailed above.

The second separation unit 10 shown in Fig. 3(a) may be modified by replacing the nanofiltration unit 40 with an evaporation unit 60. Such an evaporation unit 60 is schematically shown in Fig. 3(b).

The evaporation unit 60 is connected to a heat source, such as cooling water 34 from the co-generation plant 32, for evaporating the feed material, e.g., the process water 9 or the process water 9 and condensates 30, 36 from the drying unit 26 and the hydrothermal organic material conversion process, fed to the evaporation unit 60. The evaporation unit 60 produces a concentrate 62 and a vapour 64.

The vapour 64 may be fed to a condenser (not shown) which is connected to a cooling source (not shown), such as a cooling water cycle. In this case, the vapour 64 is condensed in the condenser and the resulting condensate is fed to the membrane filter 50. Flue gases 66 from the evaporation unit 60 and/or the condenser are discharged, e.g., by a vacuum source such as a vacuum pump.

In this case, the first component 12 produced by the second separation unit 10 is formed by the permeate 52 of the membrane filter 50 (Fig. 3(a)). The second component 14 produced by the second separation unit 10 is formed by the concentrate 62 of the evaporation unit 60 and/or the retentate 54 of the membrane filter 50.

By using a combination of an evaporation unit 60 and a membrane filter 50 for the second separation unit 10, the membrane yield of the membrane filtering step can be significantly enhanced, as has been detailed above.

Moreover, the second separation unit 10 shown in Fig. 3(a) can be modified by replacing the nanofiltration unit 40 with a combined nanofiltration and evaporation unit 70, as is schematically shown in Fig. 3(c).

The combined nanofiltration and evaporation unit 70 comprises a nanofiltration unit 40 and an evaporation unit 60 as described above. The evaporation unit 60 is connected to the nanofiltration unit 40 and arranged to receive the retentate 44 from the nanofiltration unit 40.

Feed material, e.g., the process water 9 or the process water 9 and condensates 30, 36 from the drying unit 26 and/or the hydrothermal organic material conversion process, is supplied to the nanofiltration unit 40. The nanofiltration unit 40 separates the feed material into a permeate 42 and the retentate 44. The retentate 44 of the nanofiltration unit 40 is supplied to the evaporation unit 60 and evaporated in the evaporation unit 60, thereby separating the retentate 44 into a concentrate 62 and a vapour 64.

The vapour 64 may be fed to a condenser (not shown) and condensed in the same manner as described above with reference to Fig. 3(b). Flue gases 66 from the evaporation unit 60 and/or the condenser are discharged, e.g., by a vacuum source, such as a vacuum pump.

The permeate 42 of the nanofiltration unit 40 and/or the condensed vapour 64 of the evaporation unit 60 are fed to the membrane filter 50 and separated into the permeate 52 and the retentate 54. The permeate 52 of the membrane filter 50 forms the first component 12 produced by the second separation unit 10. The second component 14 produced by the second separation unit 10 is formed by the concentrate 62 of the evaporation unit 60 and/or the retentate 54 of the membrane filter 50.

By using a combined nanofiltration and evaporation unit 70 in combination with a membrane filter 50 for the second separation unit 10, the membrane yield of the membrane filtering step can be significantly enhanced, as has been detailed above.

Condensates 30, 36 from the hydrothermal organic material conversion process and/or the drying process can be mixed with the feed material and/or the permeate 42 of the nanofiltration unit 40 and/or the condensate 64 of the evaporation unit 60 and/or the permeate 52 of the membrane filter 50.

In the following, an example of an operation of the apparatus of the second embodiment shown in Fig. 2 is presented, exemplifying an embodiment of the method of the invention. The example is performed using the apparatus shown in Fig. 2 having a combination of the nanofiltration unit 40 and the membrane filter 50 as the second separation unit 10, as is schematically shown in Fig. 3(a). The membrane filter 50 has a reverse osmosis membrane as the dense membrane.

Sewage sludge from the waste water treatment plant 18 is supplied as biomass 16 to a digester as the fermenter 2. The digested biomass is fed to the dewatering unit 4 and mechanically dewatered. Digested sludge from a waste water treatment plant with a nominal size of 740,000 population equivalents yields a mass flow of 54,000 t/year of digested sewage sludge with a total solids content of 25% after mechanical dewatering.

The mechanically dewatered, digested sewage sludge is fed to a continuous HTC reactor as the hydrothermal conversion unit 6. After HTC treatment in the continuous reactor, an HTC coal slurry with a total solids content of 16.5% and a mass flow of 58,795 t/year is produced, along with condensates 36 having a mass flow of 10,044 t/year. The coal slurry is separated in a membrane filter press as the first separation unit 8 into a filter cake with a mass flow of 12,538 t/year and a total solids content of 70% as the conversion product 11 and a filtrate with a mass flow of 46,257 t/year as the process water 9.

The process water 9 is fed to the nanofiltration unit 40 of the second separation unit 10. The nanofiltration unit 40 separates the process water 9 into a nanofiltration permeate 42 with a mass flow of 32,380 t/year and a nanofiltration retentate 44 with a mass flow of 13,877 t/year.

The condensates 36 from the HTC process are mixed with the nanofiltration permeate 42 and the resulting mixture is supplied to the membrane filter 50 with a mass flow of 42,424 t/year. The membrane filter 50 separates the mixture of the nanofiltration permeate 42 and the condensates 36 into a reverse osmosis permeate 52 with a mass flow of 36,060 t/year and a reverse osmosis retentate 54 with a mass flow of 6,364 t/year. The reverse osmosis permeate 52 forms the first component 12 produced by the second separation unit 10.

A part of the reverse osmosis permeate 52 (14,839 t/year) is fed to the steam generator 24 and used for steam generation, providing energy for the HTC reactor. The remaining part of the reverse osmosis permeate 52 with a mass flow of 21,221 t/year and a well biodegradable COD of less than 1.5 g/l is returned to the waste water treatment plant 18, preferably to an aeration tank thereof, leading to a surplus COD load for the waste water treatment plant 18 of approximately 0.2%. Hence, the reverse osmosis permeate 52 can be reused and disposed of, respectively, in an energy and cost efficient manner.

The nanofiltration retentate 44 and the reverse osmosis retentate 54 form the second component 14 produced by the second separation unit 10. The nanofiltration and reverse osmosis retentates 44, 54 are mixed with each other and returned to the digester at a mass flow of 20,241 t/year with a specific COD mass flow of 2,460 t/year. Compared to the mass flow of thickened primary and surplus activated sludge fed to the digester of 360,620 t/year, this leads to a mass flow increase of only approximately 6%. The COD mass flow of the nanofiltration and reverse osmosis retentates 44, 54 with a specific gas production of 420 Nm³/t COD leads to the generation of approximately 1,033,000 m³ biogas/year. The surplus biogas yield of the sum of primary sludge, secondary sludge and the nanofiltration and reverse osmosis retentates 44, 54 is approximately 22% compared to the digestion of only sludges with a biogas yield of 4,745,000 m³ biogas/year.

The digested sewage sludge is mechanically dewatered in the dewatering unit 4 and the dewatered digested sewage sludge is returned to the HTC reactor, improving the HTC yield. The filtrate obtained in the sludge dewatering step is returned to the waste water treatment plant 18, preferably to the aeration tank thereof, thus excluding the majority of water-soluble inorganics, i.e., salts, transported to the digester by the nanofiltration and reverse osmosis retentates 44, 54 from the HTC process.

The above example demonstrates that the present invention provides a method and an apparatus for the treatment of process water from a hydrothermal organic material conversion process which is improved in terms of both efficiency and costs.

## Claims

1. A method for the treatment of process water (9) from a hydrothermal organic material conversion process, the method comprising
an anaerobic fermenting step of anaerobically fermenting a biomass (16) in a fermenter (2),
a dewatering step of mechanically dewatering the fermented biomass obtained in the fermenting step,
a hydrothermal conversion step of subjecting the mechanically dewatered, fermented biomass obtained in the dewatering step to the hydrothermal organic material conversion process,
a first separation step of separating the process water (9) from a conversion product (11) obtained in the hydrothermal organic material conversion process,
a second separation step of separating a feed material (9, 30, 36), which includes at least the process water (9) obtained in the first separation step, into at least a first component (12) and a second component (14) so that a level of chemical oxygen demand in the first component (12) is lower than a level of chemical oxygen demand in the second component (14) and less than 10 g/l, and a yield of the first component (12) relative to the feed material (9, 30, 36) is more than 30% by weight, and
a recirculation step of returning at least a part of the second component (14) to the fermenter (2).

2. The method according to claim 1, wherein the hydrothermal organic material conversion process is a hydrothermal carbonisation process.

3. The method according to claim 1 or 2, wherein the at least a part of the second component (14) returned to the fermenter (2) is mixed with biomass (16) in the fermenter (2) in a ratio of 20% or less by weight relative to the biomass (16).

4. The method according to any one of the preceding claims, further comprising a step of feeding at least a part of the first component (12) to a waste water treatment plant (18).

5. The method according to any one of the preceding claims, further comprising a step of supplying biomass (16) from a waste water treatment plant (18) to the fermenter (2).

6. The method according to any one of the preceding claims, further comprising a step of feeding at least a part of water (22) obtained in the dewatering step to a waste water treatment plant (18).

7. The method according to any one of the preceding claims, wherein a ratio of chemical oxygen demand to 5-day biological oxygen demand in the first component (12) is less than 2.5.

8. The method according to any one of the preceding claims, wherein the second separation step comprises a membrane filtering step using a membrane filter (50) comprising a dense membrane.

9. The method according to claim 8, wherein the membrane filtering step is a reverse osmosis filtering step using a reverse osmosis membrane filter.

10. The method according to any one of the preceding claims, further comprising a step of returning a part of the second component (14) to the hydrothermal organic material conversion process.

11. An apparatus for the treatment of process water (9) from a hydrothermal organic material conversion process, the apparatus comprising
a fermenter (2) for anaerobically fermenting a biomass (16),
a dewatering unit (4) connected to the fermenter (2),
wherein the dewatering unit (4) is arranged to receive the fermented biomass from the fermenter (2) and to mechanically dewater the fermented biomass,
a hydrothermal conversion unit (6) connected to the dewatering unit (4), wherein the hydrothermal conversion unit (6) is arranged to receive the mechanically dewatered, fermented biomass from the dewatering unit (4) and to subject the mechanically dewatered, fermented biomass to the hydrothermal organic material conversion process,
a first separation unit (8) for separating the process water (9) from a conversion product (11) obtained in the hydrothermal organic material conversion process,
a second separation unit (10) connected to the first separation unit (8), wherein the second separation unit (10) is arranged to receive the process water (9) from the first separation unit (8) and to separate a feed material (9, 30, 36), which includes at least the process water (9) from the first separation unit (8), into at least a first component (12) and a second component (14) so that a level of chemical oxygen demand in the first component (12) is lower than a level of chemical oxygen demand in the second component (14) and less than 10 g/l, and a yield of the first component (12) relative to the feed material (9, 30, 36) is more than 30% by weight, and
a first recirculation unit for returning at least a part of the second component (14) to the fermenter (2).

12. The apparatus according to claim 11, wherein the hydrothermal organic material conversion process is a hydrothermal carbonisation process.

13. The apparatus according to claim 11 or 12, wherein a ratio of chemical oxygen demand to 5-day biological oxygen demand in the first component (12) is less than 2.5.

14. The apparatus according to any one of claims 11 to 13, wherein the second separation unit (10) comprises a membrane filter (50) comprising a dense membrane.

15. The apparatus according to claim 14, wherein the dense membrane is a reverse osmosis membrane.

16. The apparatus according to any one of claims 11 to 15, further comprising a second recirculation unit for returning a part of the second component (14) to the hydrothermal conversion unit (6).
